# FASCICULE DE BREVET EUROPEEN

(11) **EP 3 193 588 B1**
(45) Date de publication et mention de la délivrance du brevet: **25.09.2019**
(21) Numéro de dépôt: 15788469.3
(22) Date de dépôt: 17.09.2015
(51) Int. Cl.: A01J 25/12, A01J 25/13, A01J 25/15

(54) **DISPOSITIF DE MOULAGE POUR FROMAGES À NIVEAU D'HYGIÈNE RENFORCÉ**
FORMEN VON KÄSESTÜCKEN VORRICHTUNG MIT VERBESSERTEM HYGIENENIVEAU
CHEESE MOULDING DEVICE WITH AN ENHANCED LEVEL OF HYGIENE

(30) Priorité: 18.09.2014 FR 1458815
(43) Date de publication de la demande: 26.07.2017
(73) Titulaire: Etablissements Chalon Megard, 01460 Montréal La Cluse (FR)
(72) Inventeur: COMTE, Bruno, 01460 Montreal La Cluse (FR); CALDOGUETTO, Michel, 01460 Montreal La Cluse (FR); CHARBON, Christophe, 01460 Montreal La Cluse (FR); BERTHIER, Albert, 01460 Montreal La Cluse (FR)
(74) Mandataire: Chevalier, Renaud Philippe
(86) Numéro de dépôt international: PCT/FR2015/052497
(87) Numéro de publication internationale: WO 2016/042272

(56) Documents cités:
- EP-A1- 0 923 856
- WO-A1-2010/136994
- FR-A1- 2 679 736
- NZ-A- 248 758

## Description

L'invention concerne le domaine du moulage de fromages, préférentiellement les fromages à pâtes pressées, et plus particulièrement les dispositifs de moulage de fromages et leur système de nettoyage.

L'invention concerne les dispositifs de moulage de spécialités fromagères ou fromages à pâtes pressées cuites connues sous les noms de « Comté », « Emmental », « Beaufort », et à pâtes pressées demi-cuites ou non cuites connues sous le nom de « Raclette », « Morbier », « Tomme », « Cantal » ou analogues dans leur classification technologique fromagère mais commercialisés sous d'autres appellations.

Classiquement, les dispositifs de moulage de fromages comprennent un cylindre de moulage comportant une partie inférieure définissant une enceinte conformée pour recevoir au moins un moule à fromage, un plateau mobile configuré pour supporter le au moins un moule à fromage, une tuyauterie de lavage débouchant dans le cylindre de moulage et configurée pour amener un liquide de lavage dans ledit cylindre de moulage.

On connait du document FR2679736 A1, que le dispositif de moulage est équipé d'une tuyauterie haute permettant la création d'une dépression dans le cylindre de moulage afin de permettre son remplissage par une autre tuyauterie d'un mélange de caillé/sérum en partie basse du cylindre de moulage. Après cette phase appelée remplissage, le surplus de sérum est évacué par une ou plusieurs vannes d'extraction de sérum puis le moule abaissé est enlevé et la tuyauterie de lavage injecte un liquide de lavage dans le cylindre de moulage pour nettoyer ce dernier.

Les dispositifs de moulage actuels présentent des cylindres de moulage dont la partie inférieure est parfois difficile d'accès lors des opérations de nettoyage.

En outre, le système de nettoyage utilisé est un nettoyage à jet d'eau haute pression qui engendre des risques de dispersion des micro-organismes et d'ensemencement potentiel de l'environnement de production au niveau de la partie inférieure du cylindre de moulage.

Par ailleurs, avec ce type de dispositifs de moulage connus, lors de projections sur la partie haute du cylindre de moulage résultant du moulage des fromages ou d'opérations en périphérie de cet équipement, un transfert par ruissèlement peut s'opérer, atteignant alors la partie inférieure du cylindre de moulage et se transformant en source de contamination en tombant dans le sérum extrait.

L'invention a pour but de remédier à tout ou partie des inconvénients précités.

L'invention a pour objet un dispositif de moulage pour fromages comprenant :
- au moins un cylindre de moulage comportant une partie inférieure comportant une embase délimitant une enceinte ouverte conformée pour recevoir au moins un moule à fromage,
- au moins un plateau mobile configuré pour supporter le au moins un moule à fromage, le plateau mobile étant conformé pour obturer la partie inférieure du cylindre de moulage dans une première position dite d'obturation et pour permettre l'accès audit moule à fromage dans une deuxième position dite de retrait,
- au moins un circuit de lavage configuré pour le nettoyage dudit dispositif de moulage, ledit circuit de lavage comportant au moins une section de circuit débouchant dans la partie inférieure du cylindre de moulage,
caractérisé en ce que le dispositif de moulage comprend en outre au moins un caisson de protection positionné entre l'embase du cylindre de moulage et le plateau mobile, ledit caisson de protection délimitant une enceinte fermée par rapport à l'extérieur du dispositif de moulage.

Grâce à cette nouvelle configuration de dispositif de moulage, il est obtenu un niveau sanitaire élevé. Ainsi, les préconisations visant à proscrire le nettoyage au jet d'eau haute pression sont respectées. En effet, la mise en place d'un caisson de protection étanche entre la partie inférieure du cylindre et le plateau mobile permet d'éviter toute contamination par la partie supérieure du dispositif de moulage ou d'autres appareils situés dans cette zone et permet la mise en oeuvre d'un lavage automatique.

Selon une caractéristique de l'invention, le caisson de protection comprend une paroi supérieure reliée de manière étanche à l'embase du cylindre de moulage.

Selon une caractéristique de l'invention, une ouverture est ménagée sur la paroi supérieure du caisson de protection, ladite ouverture étant conformée pour recevoir au moins en partie le plateau mobile en position d'obturation. Avantageusement, en position d'obturation, le plateau mobile sépare de manière étanche l'embase du cylindre de moulage du caisson de protection.

Selon une caractéristique de l'invention, le caisson de protection comprend une paroi inférieure positionnée à l'opposé de la paroi supérieure et au moins une paroi latérale reliant la paroi supérieure à la paroi inférieure, la au moins une paroi supérieure dudit caisson de protection présentant au moins une pente orientée vers l'extérieur dudit dispositif de moulage. La pente de la paroi supérieure permet d'éviter toute rétention en partie supérieure pouvant par stagnation se transformer en source de contamination.

Selon une caractéristique de l'invention, la paroi supérieure est fixée de manière étanche sur la périphérie extérieure de l'embase du cylindre de moulage.

De préférence, la paroi supérieure est soudée en continu de manière étanche sur la périphérie extérieure de l'embase du cylindre de moulage.

Préférentiellement, la périphérie extérieure de l'embase présente une bordure en surépaisseur conformée pour limiter toute rétention possible.

Selon une caractéristique de l'invention, le plateau mobile comprend une rainure périphérique ménagée sur au moins une partie de la périphérie dudit plateau mobile, la rainure périphérique étant conformée pour recevoir un joint d'étanchéité destiné à permettre l'obturation étanche de l'embase du cylindre de moulage lorsque ledit plateau mobile est en position d'obturation.

Avantageusement, le joint d'étanchéité du plateau mobile est positionné en appui dans la rainure afin d'assurer son maintien en position. Ainsi, grâce au maintien du joint, les opérations de démontage en vue d'une inspection ou en vue d'un nettoyage sont facilitées. Le joint d'étanchéité permet un isolement hermétique du moule à fromage dans l'embase par l'obtention d'un contact sous pression avec la bordure périphérique de l'embase.

Selon une caractéristique de l'invention, le dispositif de moulage comprend un organe de relevage du plateau mobile positionné dans le caisson de protection, ledit organe de relevage étant configuré pour permettre le déplacement du plateau mobile au moins entre la position d'obturation et la position de retrait dudit plateau mobile.

Selon une caractéristique de l'invention, l'organe de relevage comprend un joint racleur intégré configuré pour éviter la pénétration de poussières ou de liquide dans l'organe de relevage.

Avantageusement, le joint racleur est positionné à une extrémité supérieure de l'organe, l'extrémité supérieure de l'organe étant l'extrémité positionnée de manière proximale par rapport au plateau mobile.

Selon une caractéristique de l'invention, l'organe de relevage comprend un joint supplémentaire renforçant l'étanchéité et un obturateur configuré pour contrôler l'étanchéité dudit joint.

Selon une caractéristique de l'invention, l'obturateur est un obturateur à démontage rapide.

Selon une caractéristique de l'invention, l'obturateur est positionné entre le joint supérieur et le joint racleur.

Selon une caractéristique de l'invention, le caisson de protection comprend une trappe d'accès ménagée sur une paroi latérale dudit caisson de protection.

Ainsi, on évite la pénétration à l'intérieur du dispositif de moulage d'un fluide s'écoulant sur la face extérieure de la paroi latérale.

En outre, on évite également la projection à l'extérieur du dispositif de moulage, d'un fluide pulvérisé à l'intérieur, plus particulièrement en phase lavage, ce qui est très important puisque le fluide peut contenir de la soude ou de l'acide à température élevée.

Avantageusement, la trappe d'accès a pour fonction de permettre l'accès à l'intérieur du caisson au niveau de chaque cylindre de moulage. Ainsi, l'inspection ou le démontage d'un joint périphérique d'étanchéité intégré au plateau mobile et l'inspection du joint supérieur de vérin de relevage du plateau mobile, sont possibles. En outre, la trappe d'accès permet également de sortir rapidement un moule en cas de problème et/ou de sortir le plateau mobile en cas d'opération de maintenance au niveau du vérin de relevage du plateau mobile.

Selon une caractéristique de l'invention, le circuit de lavage comprend une pluralité de sections de circuit desservant le cylindre de moulage, une première section de circuit étant débouchante dans la partie haute, une deuxième section de circuit étant débouchant dans l'embase.

Selon une caractéristique de l'invention, le circuit de lavage comprend au moins un organe de distribution et de lavage positionné dans le caisson de protection qui permet une projection du liquide de lavage sur toutes les surfaces intérieures du caisson de protection ainsi que sur la surface supérieure du plateau mobile.

Selon une caractéristique de l'invention, le circuit de lavage comprend au moins un autre organe de distribution et de lavage agencé de manière à projeter du liquide de lavage sous le plateau mobile et au niveau de l'organe de relevage.

Selon une caractéristique de l'invention, le ou les organes de distribution et de lavage comprennent la au moins une tête fixe ou rotative de lavage.

Selon une caractéristique de l'invention, le circuit de lavage est de type NEP « Nettoyage en place » et connu sous le nom anglais de CIP « Clean-in-place ». Le circuit de lavage est automatique. Le circuit de lavage est intégré au dispositif de moulage ce qui permet un nettoyage dudit dispositif de moulage sans démontage.

Selon une caractéristique de l'invention, le cylindre de moulage comprend une cavité interne configurée pour contenir un mélange caillé/sérum, au moins un organe de mise sous vide du cylindre de moulage, au moins une première tuyauterie d'amenée du mélange caillé/sérum pour un moulage sous vide débouchant dans la cavité interne.

Selon une caractéristique de l'invention, le cylindre de moulage comprend au moins une deuxième tuyauterie d'amenée de mélange caillé/sérum pour un moulage sous pression débouchant dans la cavité interne et comportant un organe de transfert configuré pour assurer l'amenée sous pression du mélange caillé/sérum dans le cylindre de moulage, l'organe de mise sous vide et l'organe de transfert étant en mis en fonctionnement sélectivement suivant le moulage choisi.

Selon une caractéristique de l'invention, ledit dispositif de moulage comprend au moins deux cylindres de moulage et un caisson de protection relié de manière étanche auxdits au moins deux cylindres de moulage.

L'invention sera mieux comprise, grâce à la description ci-après, qui se rapporte à un mode de réalisation selon la présente invention, donné à titre d'exemple non limitatif et expliqué avec référence aux dessins schématiques annexés, dans lesquels:
- La figure 1 est une vue en perspective d'un dispositif de moulage selon l'invention,
- La figure 2 est une vue en coupe du dispositif de moulage représenté en figure 1,
- La figure 3 est une vue en perspective d'un plateau mobile selon l'invention et équipant le dispositif de moulage représenté en figure 1,
- La figure 4 est une vue de côté d'un dispositif de moulage selon l'invention comprenant une pluralité de cylindres de moulage.

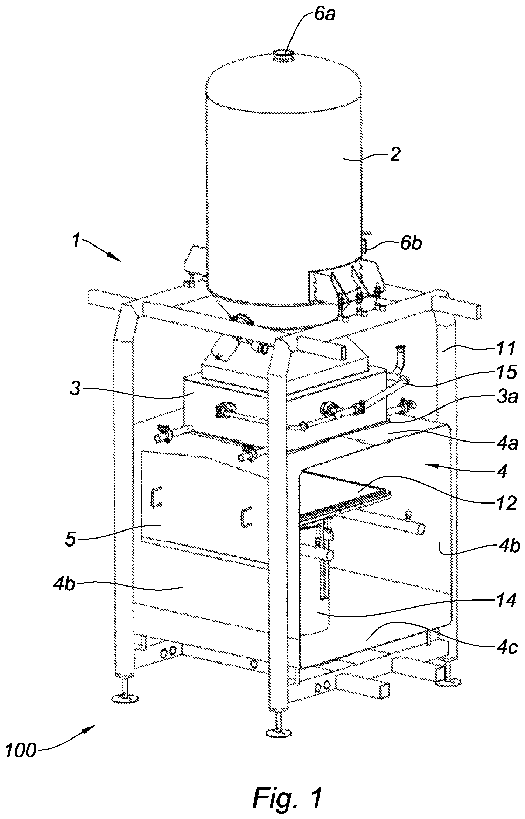

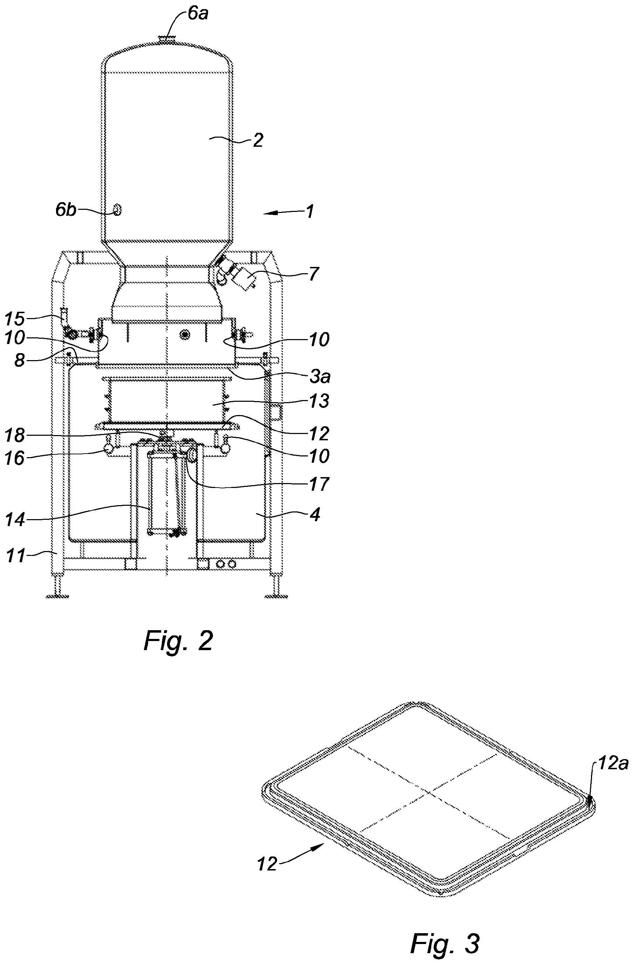

Comme illustré aux figures 1 et 2, le dispositif de moulage 100 selon l'invention, comprend un cylindre de moulage 1 comprenant une partie supérieure délimitant une cavité interne 2, et une partie inférieure comportant une embase 3 délimitant une enceinte ouverte prolongeant la cavité interne 2 de la partie supérieure du cylindre de moulage 1.

Le cylindre de moulage 1 comprend en outre une première vanne d'extraction de sérum 7 à la base de la cavité interne 2, la première vanne d'extraction de sérum 7 étant agencée de manière à évacuer l'excédent de sérum dans la cavité interne 2.

En outre, le cylindre de moulage 1 est monté sur une structure 11. La structure 11 est l'ossature même du dispositif de moulage 100 et est conçue et dimensionnée afin d'obtenir une rigidité maximale dudit dispositif de moulage 100. En outre, la structure 11 s'oppose aux contraintes de déformation que provoque l'action de relevage du plateau mobile 12 afin d'obtenir l'étanchéité nécessaire à la création et au maintien du vide pour le moulage sous vide.

Comme visible aux figures 1, 2 et 4, le cylindre de moulage 1 peut comprendre deux orifices d'alimentation 6a, 6b en mélange caillé/sérum conformé pour permettre l'introduction dudit mélange dans le cylindre de moulage 1 suivant le procédé de moulage sous vide ou sous pression retenu. Le premier orifice d'alimentation 6a débouche par le haut du cylindre de moulage 1 et le deuxième orifice d'alimentation 6b débouche latéralement dans le cylindre de moulage 1. Les deux orifices d'alimentation 6a, 6b sont raccordés à un circuit général d'alimentation non représenté.

Selon l'invention, l'enceinte ouverte de l'embase 3 est conformée pour recevoir un moule à fromage 13 comme illustré en figure 2. L'enceinte ouverte de l'embase 3 est destinée à être obturée par un plateau mobile 12 décrit par la suite.

Avantageusement, et comme représenté en figure 2, l'embase 3 présente une bordure périphérique 3a en surépaisseur. De plus, l'embase 3 est soudée en continu sur une paroi supérieure d'un caisson de protection 4 qui sera détaillé par la suite.

L'embase 3 comprend au moins une vanne d'extraction de sérum 8 agencée de manière à évacuer l'excédent de sérum présent dans le moule 13 lors du moulage du fromage.

Le dispositif de moulage 100 comprend un plateau mobile 12 configuré pour supporter le au moins un moule à fromage 13. Le plateau mobile 12 est conformé pour obturer l'embase 3 du cylindre de moulage 1 dans une première position d'obturation et pour permettre l'accès au moule à fromage 13 dans une deuxième position de retrait. Le plateau mobile 12 est mis en mouvement par un organe de relevage 14 illustré aux figures 1 et 2.

L'organe de relevage 14 comprend un vérin permettant l'écrasement du joint périphérique du plateau mobile 12.

L'organe de relevage 14 est déporté verticalement d'une distance suffisante pour permettre l'installation d'un joint d'étanchéité 18 qui permet un isolement hermétique de l'organe de relevage 14 de l'intérieur du caisson de protection 4 et d'un obturateur 17 à démontage rapide pour un contrôle de l'étanchéité renforcée dudit organe de relevage 14.

L'obturateur 17 est accessible après ouverture de la trappe d'accès 5 qui sera décrite par la suite.

Comme illustré en figure 3, le plateau mobile 12 comprend une rainure périphérique 12a qui est destinée à recevoir un joint d'étanchéité (non représenté). Le joint d'étanchéité permet un isolement hermétique du moule à fromage 13 dans l'embase 3 par l'obtention d'un contact sous pression avec la bordure périphérique 3a.

Le plateau mobile 12, dont la représentation ici est de forme globalement rectangulaire a de manière générale la même forme que la section transversale de l'embase 3 du cylindre de moulage 1 et qui peut tout autant être circulaire ou polygonale.

Le dispositif de moulage 100 comprend un circuit de lavage configuré pour le nettoyage dudit dispositif de moulage 100. Le circuit de lavage comprend une pluralité de sections de circuit, une première section de circuit 15 étant débouchante dans l'embase 3, une deuxième section de circuit 16 étant débouchant dans un caisson de protection 4 décrit plus loin dans la description.

La première section de circuit 15 comprend une pluralité d'organes de distribution et de lavage tels des têtes de lavage 10 fixes ou rotatives dédiés au nettoyage de l'embase 3 et au dessus du plateau mobile 12, comme représenté en figure 2.

La deuxième section de circuit 16 est dédiée au nettoyage du dessous du plateau mobile 12 et du caisson de protection 4. La deuxième section de circuit 16 comprend une pluralité d'organes de distribution et de lavage tels des têtes de lavage 10 fixes ou rotatives représentées en figure 2.

Le dispositif de moulage 100 comprend en outre un caisson de protection 4 positionné entre l'embase 3 du cylindre de moulage 1 et le plateau mobile 12. Le caisson de protection 4 délimite une enceinte étanche par rapport à l'extérieur du dispositif de moulage 100.

Dans l'exemple illustré en figure 1, le caisson de protection 4 comprend une paroi supérieure 4a présentant une ouverture reliée de manière étanche à l'enceinte ouverte de l'embase 3 du cylindre de moulage 1.

Le plateau mobile 12 sépare de manière étanche l'embase 3 du cylindre de moulage 1 du caisson de protection 4 lorsqu'il est en position d'obturation.

Le caisson de protection 4 comprend une paroi inférieure 4c positionnée à l'opposé de la paroi supérieure 4a et deux parois latérales 4b reliant la paroi supérieure 4a à la paroi inférieure 4c.

La paroi supérieure 4a du caisson de protection 4 présente une pente orientée vers l'extérieur dudit dispositif de moulage 100. La pente de la paroi supérieure 4a, au moins égale à 1%, évitant ainsi des rétentions de fluides en face extérieure.

Dans l'exemple illustré en figure 1, le caisson de protection 4 comprend une trappe d'accès 5 ménagée sur une paroi latérale 4b dudit caisson de protection 4.

Chaque joint d'étanchéité présent dans la rainure périphérique 12a du plateau mobile 12 est accessible après ouverture de la trappe d'accès 5 du caisson de protection 4.

Préférentiellement, une trappe d'accès 5 est ménagée pour chaque cylindre de moulage 1.

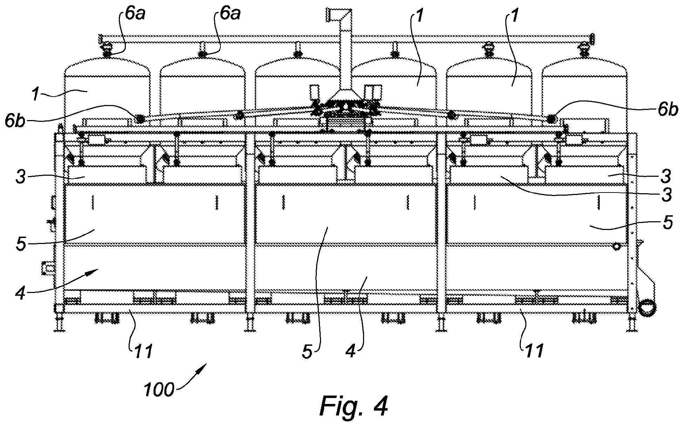

En figure 4 est représenté une configuration particulière de dispositif de moulage 100 selon laquelle le dispositif de moulage 100 comprend une pluralité de cylindres de moulage 1.

Les cylindres de moulage 1 sont appairés et reliés étanches à un caisson de protection 4 avec une trappe d'accès 5 commune pour chaque paire de cylindre de moulage 1. Bien entendu, la configuration illustrée en figure 4 n'est qu'un exemple non limitatif, les cylindres de moulage 1 pouvant être disposés différemment et/ou regroupés autrement toujours en restant dans le cadre de l'invention.

En variante non représentée, les cylindres de moulage sont reliés étanches à un caisson de protection comprenant une trappe d'accès par cylindre de moulage.

Des modifications restent possibles, notamment du point de vue de la constitution des divers éléments ou par substitution d'équivalents techniques. L'invention est limitée par l'étendue des revendications ci-jointes.

## Revendications

1. Dispositif de moulage (100) pour fromages comprenant :
- au moins un cylindre de moulage (1) comportant une partie inférieure comportant une embase (3) délimitant une enceinte ouverte conformée pour recevoir au moins un moule à fromage (13),
- au moins un plateau mobile (12) configuré pour supporter le au moins un moule à fromage (13), le plateau mobile (12) étant conformé pour obturer la partie inférieure du cylindre de moulage (1) dans une première position dite d'obturation et pour permettre l'accès audit moule à fromage (13) dans une deuxième position dite de retrait,
- au moins un circuit de lavage configuré pour le nettoyage dudit dispositif de moulage (100), ledit circuit de lavage comportant au moins une section de circuit (15) débouchant dans la partie inférieure du cylindre de moulage (1),
**caractérisé en ce que** le dispositif de moulage (100) comprend en outre au moins un caisson de protection (4) positionné entre l'embase (3) du cylindre de moulage (1) et le plateau mobile (12), ledit caisson de protection (4) délimitant une enceinte étanche par rapport à l'extérieur du dispositif de moulage (100).

2. Dispositif de moulage selon la revendication 1, **caractérisé en ce que** le caisson de protection (4) comprend une paroi supérieure (4a) reliée de manière étanche à l'embase (3) du cylindre de moulage (1).

3. Dispositif de moulage selon la revendication 2, **caractérisé en ce qu'**une ouverture est ménagée sur la paroi supérieure (4a) du caisson de protection (4), ladite ouverture étant conformée pour recevoir au moins en partie le plateau mobile (12) en position d'obturation.

4. Dispositif de moulage selon l'une quelconque des revendications 2 ou 3, **caractérisé en ce que** le caisson de protection (4) comprend une paroi inférieure (4c) positionnée à l'opposé de la paroi supérieure (4a) et au moins une paroi latérale (4b) reliant la paroi supérieure (4a) à la paroi inférieure (4c), la au moins une paroi supérieure (4a) dudit caisson de protection (4) présentant au moins une pente orientée vers l'extérieur dudit dispositif de moulage (100).

5. Dispositif de moulage selon l'une quelconque des revendications 1 à 4, **caractérisé en ce que** le plateau mobile (12) comprend une rainure périphérique (12a) ménagée sur au moins une partie de la périphérie dudit plateau mobile (12), la rainure périphérique (12a) étant conformée pour recevoir un joint d'étanchéité destiné à permettre l'obturation étanche de l'embase (3) du cylindre de moulage (1) lorsque ledit plateau mobile (12) est en position d'obturation.

6. Dispositif de moulage selon l'une quelconque des revendications 1 à 5, **caractérisé en ce que** le dispositif de moulage (100) comprend en outre un organe de relevage (14) du plateau mobile (12) positionné dans le caisson de protection (4), ledit organe de relevage (14) étant configuré pour permettre le déplacement du plateau mobile (12) au moins entre la position d'obturation et la position de retrait dudit plateau mobile (12).

7. Dispositif de moulage selon la revendication 6, **caractérisé en ce que** l'organe de relevage (14) comprend un joint (18) supplémentaire renforçant l'étanchéité et un obturateur (17) configuré pour contrôler l'étanchéité dudit joint (18).

8. Dispositif de moulage selon l'une quelconque des revendications 4 à 7, **caractérisé en ce que** le caisson de protection (4) comprend une trappe d'accès (5) ménagée sur une paroi latérale (4b) dudit caisson de protection (4).

9. Dispositif de moulage selon l'une quelconque des revendications 1 à 8, **caractérisé en ce que** le circuit de lavage comprend au moins un organe de distribution et de lavage (10) positionné dans le caisson de protection (4).

10. Dispositif de moulage selon l'une quelconque des revendications 1 à 9, **caractérisé en ce que** ledit dispositif de moulage (100) comprend au moins deux cylindres de moulage (1) et un caisson de protection (4) relié de manière étanche aux au moins deux cylindres de moulage (1).

## Patentansprüche

1. Formgebungsvorrichtung (100) für Käse, umfassend:
- mindestens einen Formgebungszylinder (1), aufweisend einen unteren Teil, aufweisend eine Basis (3), welche einen offenen Raum begrenzt, der ausgebildet ist, um mindestens eine Käseform (13) aufzunehmen,
- mindestens eine bewegliche Platte (12), die konfiguriert ist, um die mindestens eine Käseform (13) zu tragen, wobei die bewegliche Platte (12) ausgebildet ist, um den unteren Teil des Formgebungszylinders (1) in einer ersten Verschlussposition zu verschließen und um den Zugriff auf die Käseform (13) in einer zweiten Rückzugsposition zu gestatten,
- mindestens einen Reinigungszyklus, der für die Reinigung der Formgebungsvorrichtung (100) konfiguriert ist, wobei der Reinigungszyklus mindestens einen Leitungsabschnitt (15) aufweist, der in den unteren Teil des Formgebungszylinders (1) ausmündet,
**dadurch gekennzeichnet, dass** die Formgebungsvorrichtung (100) ferner mindestens ein Schutzgehäuse (4) umfasst, das zwischen der Basis (3) des Formgebungszylinders (1) und der beweglichen Platte (12) positioniert ist, wobei das Schutzgehäuse (4) einen in Bezug auf außerhalb der Formgebungsvorrichtung (100) dichten Raum begrenzt.

2. Formgebungsvorrichtung nach Anspruch 1, **dadurch gekennzeichnet, dass** das Schutzgehäuse (4) eine obere Wand (4a) umfasst, die dicht mit der Basis (3) des Formgebungszylinders (1) verbunden ist.

3. Formgebungsvorrichtung nach Anspruch 2, **dadurch gekennzeichnet, dass** auf der oberen Wand (4a) des Schutzgehäuses (4) eine Öffnung eingerichtet ist, wobei die Öffnung ausgebildet ist, um die bewegliche Platte (12) in Verschlussposition mindestens teilweise aufzunehmen.

4. Formgebungsvorrichtung nach einem der Ansprüche 2 oder 3, **dadurch gekennzeichnet, dass** das Schutzgehäuse (4) eine untere Wand (4c) umfasst, die gegenüber der oberen Wand (4a) positioniert ist, und mindestens eine Seitenwand (4b), welche die obere Wand (4a) mit der unteren Wand (4c) verbindet, wobei die mindestens eine obere Wand (4a) des Schutzgehäuses (4) mindestens eine Schräge aufweist, die nach außerhalb der Formgebungsvorrichtung (100) gerichtet ist.

5. Formgebungsvorrichtung nach einem der Ansprüche 1 bis 4, **dadurch gekennzeichnet, dass** die bewegliche Platte (12) eine Umfangsnut (12a) umfasst, die auf mindestens einem Teil des Umfangs der beweglichen Platte (12) eingerichtet ist, wobei die Umfangsnut (12a) ausgebildet ist, um eine Dichtung aufzunehmen, die bestimmt ist, den dichten Verschluss der Basis (3) des Formgebungszylinders (1) zu gestatten, wenn die bewegliche Platte (12) in Verschlussposition ist.

6. Formgebungsvorrichtung nach einem der Ansprüche 1 bis 5, **dadurch gekennzeichnet, dass** die Formgebungsvorrichtung (100) ferner ein Huborgan (14) der beweglichen Platte (12) umfasst, das in dem Schutzgehäuse (4) positioniert ist, wobei das Huborgan (14) konfiguriert ist, um die Verlagerung der beweglichen Platte (12) mindestens zwischen der Verschlussposition und der Rückzugsposition der beweglichen Platte (12) zu gestatten.

7. Formgebungsvorrichtung nach Anspruch 6, **dadurch gekennzeichnet, dass** das Huborgan (14) eine zusätzliche Dichtung (18) umfasst, welche die Dichtigkeit verstärkt, und einen Verschluss (17), der konfiguriert ist, um die Dichtigkeit der Dichtung (18) zu kontrollieren.

8. Formgebungsvorrichtung nach einem der Ansprüche 4 bis 7, **dadurch gekennzeichnet, dass** das Schutzgehäuse (4) eine Zugangsklappe (5) umfasst, die auf einer Seitenwand (4b) des Schutzgehäuses (4) eingerichtet ist.

9. Formgebungsvorrichtung nach einem der Ansprüche 1 bis 8, **dadurch gekennzeichnet, dass** der Reinigungszyklus mindestens ein Verteilungs- und Reinigungsorgan (10) umfasst, das in dem Schutzgehäuse (4) positioniert ist.

10. Formgebungsvorrichtung nach einem der Ansprüche 1 bis 9, **dadurch gekennzeichnet, dass** die Formgebungsvorrichtung (100) mindestens zwei Formgebungszylinder (1) und ein Schutzgehäuse (4) umfasst, das mit den mindestens zwei Formgebungszylindern (1) dicht verbunden ist.

## Claims

1. A molding device (100) for cheeses, comprising:
- at least one molding cylinder (1) including a lower portion including a base (3) delimiting an open enclosure shaped so as to receive at least one cheese mold (13),
- at least one movable tray (12) configured to support the at least one cheese mold (13), the movable tray (12) being shaped so as to seal the lower portion of the molding cylinder (1) in a first position called sealing position and to enable access to said cheese mold (13) in a second position called removal position,
- at least one washing circuit configured for cleaning of said molding device (100), said washing circuit including at least one circuit section (15) opening into the lower portion of the molding cylinder (1),
**characterized in that** the molding device (100) further comprises at least one protective box (4) positioned between the base (3) of the molding cylinder (1) and the movable tray (12), said protective box (4) delimiting an enclosure sealed with respect to the outside of the molding device (100).

2. The molding device according to claim 1, **characterized in that** the protective box (4) comprises an upper wall (4a) tightly connected to the base (3) of the molding cylinder (1).

3. The molding device according to claim 2, **characterized in that** an opening is formed on the upper wall (4a) of the protective box (4), said opening being shaped so as to receive at least partially the movable tray (12) in the sealing position.

4. The molding device according to any one of claims 2 or 3, **characterized in that** the protective box (4) comprises a lower wall (4c) positioned opposite to the upper wall (4a) and at least one sidewall (4b) connecting the upper wall (4a) to the lower wall (4c), the at least one upper wall (4a) of said protective box (4) having at least one slope orientated towards the outside of said molding device (100).

5. The molding device according to any one of claims 1 to 4, **characterized in that** the movable tray (12) comprises a peripheral groove (12a) formed over at least one portion of the periphery of said movable tray (12), the peripheral groove (12a) being shaped so as to receive a sealing gasket intended to enable tight sealing of the base (3) of the molding cylinder (1) when said movable tray (12) is in the sealing position.

6. The molding device according to any one of claims 1 to 5, **characterized in that** the molding device (100) further comprises a member (14) for lifting the movable tray (12) positioned within the protective box (4), said lift member (14) being configured to enable the displacement of the movable tray (12) at least between the sealing position and the removal position of said movable tray (12).

7. The molding device according to claim 6, **characterized in that** the lift member (14) comprises an additional gasket (18) reinforcing tightness and a plug (17) configured to control the tightness of said gasket (18).

8. The molding device according to any one of claims 4 to 7, **characterized in that** the protective box (4) comprise an access hatch (5) formed on a sidewall (4b) of said protective box (4).

9. The molding device according to any one of claims 1 to 8, **characterized in that** the washing circuit comprises at least one delivery and washing member (10) positioned within the protective box (4).

10. The molding device according to any one of claims 1 to 9, **characterized in that** said molding device (100) comprises at least two molding cylinders (1) and a protective box (4) tightly connected to the at least two molding cylinders (1).
